# EUROPÄISCHE PATENTSCHRIFT

(11) **EP 1 029 202 B1**
(45) Veröffentlichungstag und Bekanntmachung des Hinweises auf die Patenterteilung: **07.01.2004**
(21) Anmeldenummer: 97912129.0
(22) Anmeldetag: 07.10.1997
(51) Int. Cl.: F24F 12/00, F28D 19/04

(54) **REGENERATIVER WÄRMETAUSCHER**
REGENERATIVE HEAT EXCHANGER
ECHANGEUR THERMIQUE REGENERATEUR

(30) Priorität: 08.10.1996 DE 19641318
(43) Veröffentlichungstag der Anmeldung: 23.08.2000
(73) Patentinhaber: Stolz, Oleg, 50668 Köln (DE)
(72) Erfinder: Stolz, Oleg, 50668 Köln (DE)
(74) Vertreter: Kreutzer, Ulrich, Dipl.-Phys.
(86) Internationale Anmeldenummer: PCT/EP1997/005502
(87) Internationale Veröffentlichungsnummer: WO 1998/015784

(56) Entgegenhaltungen:
- DE-A- 3 104 988
- DE-A- 4 223 005
- DE-A- 4 241 984
- FR-A- 2 388 239
- GB-A- 2 251 301
- US-A- 4 825 936

## Beschreibung

Der Lüftungsenergieanteil in Gebäuden beträgt nach der neuen Wärmeschutzverordnung 1995 bis zu 70 % der Heizenergie. Könnte man die Lüftungswärme wirksam rückgewinnen, ließen sich in der BRD jährlich ca. 15 Mio. Tonnen Heizöl einsparen.

Zielsetzung dieser Erfindung war es, ein Lüftungssystem mit sehr hoher Wärmerückgewinnung zu entwickeln, welches weitgehend von jedermann genutzt werden kann, um obige Einsparungen zu ermöglichen.

Nach Möglichkeit sollte dieses System alle oder die meisten lüftungsbedingten Nutzerwünsche erfüllen können, d.h. für den Winterbetrieb soll die Frischluft warm, im Sommerbetrieb soll die Frischluft gekühlt in den Raum eingebracht werden können. Weiter soll die Frischluft in ausreichenden Masse gefiltert werden. Im Winter sollte auch die Möglichkeit bestehen, die Frischluft angefeuchtet in den Raum einzubringen, nicht jedoch im Sommer.

Des weiteren mußte gefordert werden, daß ein derartiges Lüftungssystem Leistungen erbringen kann, die ein übliches Öffnen der Fenster nicht mehr nötig machen, so daß die hohe mögliche Wärmerückgewinnung auch wirkungsvoll greifen kann.

Aus energetischen Überlegungen und auch praktischen Erwägungen heraus ergibt sich in jedem Fall ein dezentrales kanalloses Lüftungssystem, welches auch nachträglich in vorhandene Fensterscheiben eingebaut werden können muß, zumindest als Regellösung. Nur dann kann gewährleistet werden, daß das Lüftungssystem in seiner Gesamtheit so preiswert gestaltet werden kann, daß es der üblichen Fensterlüftung sogar ökonomisch überlegen ist, und erst dadurch das gesetzte Ziel überhaupt erreichbar erscheint.

Bei der Problemlösung zeigte es sich, daß das vordergründig schwierig erscheinende Teilproblem, nämlich eine Wärmerückgewinnung von beispielsweise 90 %, klein war im Vergleich zu den anderen hierbei auftretenden Problemen.

Die eigentlichen Probleme liegen in der Nutzerakzeptanz. Von dieser Seite aus gesehen, unter Voraussetzung des oben erwähnten Fenstereinbaues, wären die idealen Geräteeigenschaften vom Nutzer aus gesehen in etwa folgende:

Das Gerät soll wenig kosten, unsichtbar, so klein wie möglich und wartungsfrei sein, eine lange Lebensdauer besitzen, unhörbar sein, keinen Zug machen und wenig Strom verbrauchen.

Erfindungsgemäß wird versucht, zumindest ansatzweise, diese acht extremen Nutzerwünsche zu erfüllen.

Infolge der geringen Abmessungen, des Fenstereinbaues, der hohen Wärmerückgewinnung, des geringen Eigenenergiebedarfes, der relativ hohen Wartungsfreiheit, der hohen Lebensdauer konnte dieser Punkt für den Nutzer zumindest mittelfristig gelöst werden.

Die meisten Elemente können glasklar durchsichtig gestaltet werden, so daß eine hohe Transparenz erzielt wird. Wesentlichen Anteil hat hierbei die Wärmetauscherkonstruktion gemäß der deutschen Patentanmeldung DE-A-42 41 984, welche eine geringe Bautiefe in Durchströmrichtung gestattet und im Innenbereich der Wärmetauschertrommel durchsichtig sein kann.

Eine aus dem Stand der Technik bekannte Konstruktion nach DE-A-42 41 984 gestattet in einer Beziehung an die Grenze des theoretisch Möglichen heranzukommen. Für die tatsächliche Baugröße ergeben sich dann natürliche Grenzen, welche durch den Antrieb der Wärmetauschertrommel, die lärmmäßige Güte, den Wirkungsgrad und die Baugröße der verwendeten Ventilatoren bestimmt wird. Durch teilweises Ausnutzen des inneren Trommelraumes für die Ventilatoren in Verbindung mit entsprechenden strömungsformenden Elementen kann auch die axiale Baugröße kurz gehalten werden, so daß ein Fenstereinbau ohne wesentlich vorstehende Teile möglich wird.

Erfindungsgemäß werden in der Konstruktion keinerlei verschleißende Elemente eingesetzt. Sämtliche Bewegungsabdichtungen sind als Spaltdichtungen hoher Präzision ausgeführt. Die Lagerung der Wärmetauschertrommel erfolgt im Gegensatz zu der DE-A-42 41 984 statt mit Laufrädern magnetisch. Durch die besondere Lagerungsart, sowohl der magnetischen als auch der Zentrallagerung, wird einerseits eine extrem hohe Lebenserwartung als auch ein sehr einfaches Handling bei Reinigungsarbeiten und die Möglichkeit des Verzichtes eines separaten Trommelantriebes und der dazugehörigen Trommeldrehzahlregelung erreicht.

Das Trommelantriebsdrehmoment wird dadurch so gering, daß bereits der im Abstrom des Frischluftaxialventilators enthaltene Drall dieses Drehmoment leicht liefert.

Dieser Drall kann in dreierlei Hinsicht genutzt werden, und zwar zunächst zur Überwindung des Reibmomentes. Weiterhin zur Überwindung des Abluftstromdrehmomentes: Tritt die Abluft durch den Wärmetauscher hindurch, wird ihr ein Drall aufgeprägt entsprechend der Rotationsgeschwindigkeit des Wärmetauschers. Diese Drallaufprägung bremst die Rotation ab. Letztlich noch zur automatischen Anpassung der Rotordrehzahl an den Luftdurchsatz: Ausgehend von einem bestimmten Betriebszustand, der durch die augenblicklichen Luftmengen und einer bestimmten Rotationsgeschwindigkeit gekennzeichnet sei, also Gleichgewichtszustand zwischen antreibendem und bremsenden Moment, wird bei Erhöhung beider Luftmengen ein höheres Antriebsmoment für den Frischluftventilator benötigt.

Dieses höhere Antriebsmoment steht nun dem Trommelantrieb zur Verfügung. Die Trommel wird dadurch drehbeschleunigt, und zwar solange, bis das ebenfalls jetzt zunehmende Abluftmoment wieder so groß ist wie das Antriebsmoment. Der Zusammenhang ist bei Vernachlässigung der Reibung Volumenstromproportional, und genau dies wird für den Drehantrieb benötigt. Die natürliche Drehzahl liegt bei Wahl eines bestimmten Betriebszustandes und eines bestimmten Ventilators für eine gegebene Trommelabmessung fest, zumindest dann, wenn man nicht durch ein zusätzliches Leitelement einen extra Drall erzeugt, was jedoch möglich wäre, aber nicht nötig ist. Die benötigte Wärmekapazität (Speichervermögen) des Wärmetauschers liegt damit auch unter Berücksichtigung weiterer Randbedingungen fest. Damit ergibt sich dann die benötigte Dicke des Wärmetauschers und damit auch die Netzstrukturgröße.

Die Lebensdauer wird in erster Linie nur durch das Lageröl der Gleitlager der Ventilatoren vorläufig begrenzt. Diese Lager werden deshalb so kalt wie möglich gehalten und Erwärmung durch den Motor wird durch hohen Wirkungsgrad niedrig gehalten. Weil trotzdem nach ca. 10 - 15 Jahren hier Wartungsarbeiten nötig sind, und ein teurer Kundendienst vermieden werden soll, werden Laufrad samt Lagerung zu einer steckbaren Einheit gemacht, welche nur durch die in dieser Einheit sowieso vorhandenen Permanentmagnete axial durch den Stator des Außenläufermotors fixiert werden. Diese Einheit kann dann bei Bedarf werkzeuglos innerhalb von Sekunden vom Nutzer gewechselt werden. Ebenso ist es dadurch leicht möglich, den Laufring und auch das Laufrad selbst bequem zu Reinigen. Das Zentrallager, vorzugsweise ein kleines Kugellager, kann bei Bedarf ebenfalls vom Nutzer selbst leicht gewechselt werden. Die Standzeit dieses Lagers liegt wegen der sehr geringen Belastung und den niedrigen Temperaturen in der Größenordnung von 30 Jahren. Das Zentrallager verbleibt beim notwendigen Reinigen des Wärmetauschers in in der Quertraverse, so daß dieses Lager nie mit Feuchtigkeit belastet wird.

Durch Einführung eines aerodynamischen Rotorantriebs kann auf eine zusätzliche Lärmquelle verzichtet werden, welche vor allem bei niedrigen Geräuschpegeln dominierend sein kann. Des weiteren kann durch drallnehmende Elemente vor den Ansaugöffnungen der Ventilatoren und durch sorgfältige Ausbildung der Einströmdüsen, dünne, vom Laufrad weiter entfernte Stege und aufnahmeleistungsmindernde Diffusoren sowie durch körperschallmindemde Massnahmen die Geräuschquellen weiter reduziert werden. Der Wärmetauscher selbst wirkt letztendlich durch die beiden Lochbleche und das wärmeübertragende Netz als wirksamer Schalldämfer. Zudem ist im Innenraum der Trommel noch Platz, welcher noch teilweise mit Schallabsorbern gefüllt werden kann, natürlich unter teilweiser Aufgabe der Durchsichtigkeit. Durch die Einführung der drallnehmenden Strömungsgleichrichter kann die Strömung trotz beengter Verhältnisse wieder geordnet werden. Nicht zuletzt sind die Ventilatoren und der Wärmetauscher im geräuschoptimalen Betriebsbereich aufeinander abgestimmt.

Durch das Weglassen eines Gehäuses entsteht der größtmögliche Ausströmquerschnitt. Infolge der radialen Ausströmung baut sich die restliche Geschwindigkeit sehr rasch ab. Um ein Hochströmen in den Absaugbereich und damit einen teilweisen Strömungskurzschluß zu verhindern, wird ein Strömungsgleichrichter am Auslaß, ebenfalls magnetisch fixiert (am Fenstereinbauring), vorgesehen. Dieser nimmt auch gleichzeitig den Drall weg. Die sich ergebende Strömung sinkt dann praktisch langsam nach unten, so daß dieses Lüftungssystem praktisch wie ein vorteilhaftes Quellluftsystem wirken kann. (Die einströmende Frischluft ist immer etwas kälter als die Raumluft, auch im Sommer, da ja auch mit diesem Gerät gekühlt werden kann.)

Alle Maßnahmen, welche der Lärmminderung dienen, wirken gleichzeitig aufnahmeleistungsmindernd. Verwendung von kollektorlosen Gleichstrommotoren.

Nach Abnahme des Wärmetauschers kann dieser in einer Badewanne mit kaltem Wasser und Reinigungsmittel leicht durch hin und herrollen gereinigt werden. Halbjährlich kann eine Intensivreinigung mit Salzwasser in gleicher Weise durchgeführt werden. Das Gerät ist auf Grund der Einbaumöglichkeit in die Fensterscheibe von allen Seiten zugänglich und damit voll reinigbar, selbst die Laufräder und der Laufring. Der zwischen den Ventilatoren liegende Bereich (Acrylglas), welcher normalerweise nicht zugänglich sein kann, aber dennoch Verbindung zur Luft haben muß (Volumenänderung der Luft bei Umgebungs Temperaturen von -30 °C bis +40 °C, Drücke), und deshalb staubgefährdet ist, wird über eine einzige kontrollierbare Öffnung mit entstaubter und entfeuchteter Luft versorgt.

Durch Ausführung der durchsichtigen Ventilatorenhalterungen aus Acrylglas wird neben den optischen Vorzügen auch gleichzeitig die bakterienund pilzvemichtende Wirkung des UV-Anteils des Sonnenlichts dem Wärmetauscher zur Verfügung gestellt. Des weiteren kann dem Wärmetauscher über zwei axiale hochspannungführende Drähte im raumseitigen Abluftbereich Ozon zugeführt werden. Dieses befreit das Wärmetauschergewebe wirkungsvoll von Geruchstoffen und gelangt direkt in die Außenluft. Da der Wärmetauscher sich unter den Drähten bewegt, wird er auf seiner gesamten Fläche gereinigt. Die lokale Ozonkonzentration kann dabei sehr hoch liegen, während die Konzentration in der Abluft selbst niedrig sein kann. In die Raumluft selbst gelangt kein Ozon.

Die Reinigungs- und Wartungsarbeiten können durch magnetische Fixierung aller Elemente praktisch werkzeuglos durchgeführt werden.

Für den Winterfall ist es wünschenswert, auch einen größeren Teil der Abluftfeuchte rückzugewinnen. Im Sommerfall dagegen ist dies nicht wünschenswert. Eine Möglichkeit wäre, zwei Trommeln mit unterschiedlichen Netzmaterialien zu verwenden, das eine Material mit absorbierenden Eigenschaften, z. B. Perlon, das andere mit neutralen Eigenschaften, z. B. Polyethylen.

Zur Kühlung wird die Verdunstungskühlung in Verbindung mit der Kapilarwirkung von Geweben für den Wassertransport ausgenutzt. Die Abluft wird, bevor sie in den Wärmetauscher gelangt, durch ein feuchtes Baumwollgewebe mit einer Struktur ähnlich wie das Wärmetauscher-Netz gesaugt. Als brauchbar hat sich hierbei ein Verbandsgewebe erwiesen. Etwa vier Lagen reichen für eine ca. 98 % Luftbefeuchtung aus. Beim Durchtritt durch dieses Gewebe kühlt sich die Abluft praktisch auf Kühlgrenztemperatur ab. Die kalte Abluft gelangt dann in den Wärmetauscher und kühlt diesen ebenfalls ab. Die Frischluft wird beim Durchtritt dann ebenfalls fast bis auf diese Temperatur heruntergekühlt, ohne dabei zusätzlich Feuchte aufzunehmen. Durchschnittlich gelangt die Frischluft etwa 6 °C kälter als die Abluft in den Raum.

Die Wasserversorgung des Gewebes erfolgt folgendermaßen:

Über ein schwimmergesteuertes Wasserventil, welches über einen dünnen Schlauch direkt mit dem Wasserleitungsdruckwasser versorgt wird, wird der Wasserstand in mehreren U-förmigen Kanälen, welche zueinander parallel und in einer Höhe verlaufen und miteinander kommunizieren, ungefähr konstant gehalten.

Die U-förmigen Kanäle sind an ihren stimseitigen Enden verschlossen. Die U-Kanäle sind in einem flachen waagrechten Rahmen derartig gefaßt, daß die obere Rahmenfläche bündig mit den oben offenen U-Kanäle abschließt, wobei die Enden der U-Kanäle noch etwa 10 mm in den Rahmen einmünden. Auf diesen Rahmen kann jetzt ein passend geschnittenes mehrlagiges Baumwollgewebe flach aufgelegt werden.

An den Stellen, wo die Kanäle sich befinden, wird eine passende Stange eingelegt, welche das Gewebe in die wassergefüllten Kanäle taucht. Der lichte Abstand der U-Kanäle wird so gewählt, daß die kapillare Wassertransportleistung der Verdunstungsmöglichkeit entspricht (ca. 4 - 6 cm). Mit diesem Verdunstungsrahmen, welcher in Verbindung mit einer sammelnden und in etwa dichtenden Luftkanalkonstruktion auf den Fensterring aufgesetzt werden kann, ist ein leichtes Reinigen des verdunstenden Baumwollgewebes gewährleistet. Ebenfalls aus diesem Grund kann mit normalem nichtentkalkten Leitungswasser gekühlt werden. Zu starker störender Kalkbesatz kann aus dem Gewebe mit Essig entfernt werden.

Das Auflegen des Gewebes ist sehr einfach und die Dichtigkeit des Gewebeanschlusses an den Rahmen ist voll gewährleistet. Die Größe des Rahmens wird so gewählt, das der Strömungsdruckverlust nur ca. 1 - 3 Pa beträgt. Deshalb ist es auch nicht notwendig, den Luftkanal um die rotierende Trommel absolut dicht ausführen zu müssen. Spaltdichtungen sind voll ausreichend.

Der Vorteil der beschriebenen Anordnung ist der, daß die Kühlung bis auf den kleinen zusätzlichen Druckverlust ohne Fremdenergie betrieben werden kann und mit minimalen gerade nötigen Wassermengen auskommt und eine weitere Regelung nicht nötig ist. Weiter ist vorteilhaft, daß für die Wasserversorgung wegen der geringen Mengen ein Schlauch von weniger als 1 mm lichter Weite verwendet werden kann, welcher nahezu unsichtbar und schnell verlegt werden kann.

Die Ausführung der Konstruktion erfolgt vorzugsweise aus durchsichtigem Kunststoff.

Der beschriebene Verdunstungsrahmen wird vorzugsweise gefaltet ausgeführt, so daß mit geringer Baubreite der erforderliche Strömungsquerschnitt erhalten wird.

Das Gerät muß in einem Temperaturbereich von -30 °C bis +40 °C einwandfrei arbeiten, wobei Teile des Gerätes unabhängig von der Außentemperatur jeweils auf Raumtemperatumiveau sich befinden, während gleichzeitig andere Teile Außentemperatur annehmen.

Aufgrund der Nutzerakzeptanz und des Fensterscheibeneinbaues muß das Gerät durchsichtig, klein und leise und trotzdem hohen Wirkungsgrad und hohe Lüftungsleistung besitzen (Baugröße ca. 380 mm bei 200 mm raumseitiger Bautiefe und 80 - 200 m³/h Frischluft bei ≥ 90 % ).

Dies bedeutet, daß innerhalb des Gerätes mit sehr großen Temperaturunterschieden und Ausdehnungen zu rechnen ist.

Bei dem angestrebten hohen Wirkungsgrad von ca. 90 % und der kleinen Baugröße bereitet es Schwierigkeiten, unter den gegebenen Randbedingungen eine betriebssichere Abdichtung über diesen Temperaturbereich zu erhalten.

Eine Abdichtung, nämlich die zwischen Rotor und Einbauring ist besonders kritisch, da die Luftmenge, welche hier durchströmt, nicht am Wärmeaustausch teilnimmt. Wenn 1 % der Luftmenge hier durchströmt, sinkt der Wirkungsgrad ebenfalls bereits um ca. 1 %, d. h. die eigentliche Wärmeübertragungsgüte muß 91 % statt 90 % betragen. Dies wiederum bedeutet ca. 10 % größeren Wärmeaustauscher. Da auch noch andere wirkungsgradmindemde Faktoren hereinspielen, liegt letzter Wert sogar noch höher. Dies würde bei einem weniger effizienten Gerät kaum eine Rolle spielen, wird aber bei einem hocheffizienten Gerät wesentlich. Bei einem hocheffizienten Gerät spielt es dafür für den Lüftungsenergieverbrauch keine Rolle, ob viel oder wenig oder keine Lüftung erfolgt, d. h. es ist bei einem derartigen Gerät keine Luftmengenregelung oder Luftqualitätsüberwachung mehr nötig. Bei einem niedereffizienten Gerät dagegen sind solche Regelungen noch sinnvoll und notwendig. Bestimmte Teile des Gerätes, nämlich alle raumseitigen Oberflächen, sind der Raumtemperatur und Raumluftfeuchtigkeit ausgesetzt. Die inneren Oberflächen des Gerätes sind alle den Außenluftbedingungen ausgesetzt.

Werden keine besonderen Maßnahmen ergriffen, können an der raumseitigen Oberfläche Kondensationserscheinungen und Eisbildung auftreten, welche dem schwachen aerodynamischen Antrieb Schwierigkeiten bereiten können.

Da der angesprochene kritische Dichtspalt ca. 0,3 mm oder kleiner sein sollte, werden hohe Anforderungen an die gesamte Konstruktion gestellt, hinsichtlich Fertigungsqualität, Montagequalität, Lagerungsqualität etc. Die getroffenen Maßnahmen lassen sich in zwei Gruppen unterteilen.

Die eine Gruppe beinhaltet Maßnahmen, welche für die eigentliche Funktion nötig sind, die andere dient der Lärmminderung und der Wartungsfreundlichkeit.

### 1. Aerodynamischer Antrieb der Wärmetauschertrommel

Ausgenutzt wird der Drall, welchen der Frischluftventilator axialer Bauart naturgemäß der Luft aufprägt. Diese Lufttrehung wird durch das Wärmetauschernetz abgebremst, da es selbst wie ein Turbinengitter wirkt. Der Drehimpuls bewegt damit den Wärmetauscher. Dieses Prinzip läßt sich natürlich auch auf andere regenerative Wärmetauscher mit Drehantrieb übertragen, wenn eine entsprechend leichtgängige Lagerung vorgesehen ist. Ebenfalls kann dieses Prinzip bei vollkommen passiven Wärmetauscherelementen durchgeführt werden, wenn durch eine statische drallerzeugende Maßnahme der Luft eine Umfangskomponente erteilt wird. Weiter vorteilhaft ist bei diesem Drehantrieb, daß sich die Drehgeschwindigkeit automatisch an die Luftmenge anpaßt. Da das Antriebsdrehmoment sehr klein ist, besteht die Gefahr, daß z. B. Insekten, welche in die seitlichen Dichtspalte gezogen werden, den Antrieb zum Erliegen bringen könnten. Diesem kann aber leicht dadurch begegnet werden, daß die Schwungmasse des Rotors ausreichend groß gemacht wird und die Ansaugwabe klein genug (3 mm reichen aus). In zwei Jahren wurde jedenfalls noch kein Stillstand des Rotors beobachtet, so daß sich dieser Antrieb als außerordentlich zuverlässig erwiesen hat.

### 2. Verzicht auf vollkommene Abdichtung zwischen Frischluft und Abluftkammer an den Längstraversen

Es kann ohnehin nicht verhindert werden, daß aus dem Frischluftbereich Luft in den Abluftbereich hinübergedrückt wird, gleichgültig wie die wärmeübertragende Konstruktion ist. Bei einer geschlossenzelligen Bauart wird Luft mindestens durch die Drehbewegung übertragen, bei einer offenzelligen Bauart, wie sie bei dem verwendeten Netz letztendlich vorliegt, strömt Luft in Umfangsrichtung von der Kammer hohen Druckes in die Kammer niederen Druckes. Mit einer ausreichend langen Strömungsweglänge kann dieser Verlust minimiert werden, wobei es hier tatsächlich ein echtes Optimum gibt, wenn man bedenkt, daß die Dichtungsweglänge von der wirksamen Wärmetauscherlänge (Umfang) abgezogen werden muß. Deshalb wird nur eine einfache Spaltdichtung vorgesehen, deren Spaltmaß nur durch die Fertigungsqualität und mögliche Rotorbewegungen limitiert wird. Bei der angegebenen Gerätegröße liegt das Spaltmaß bei 0,5 mm und die Dichtspaltlänge bei 35 mm. Der Verlust durch den Spalt bedingt im Prinzip nur eine entsprechende Mehrförderung der Ventilatoren, aber keine Wirkungsgradminderung. Vorteilhaft ist bei dieser Maßnahme, daß dadurch der aerodynamische Drehantrieb erst ermöglicht wird und außerdem die Dichtung verschleißfrei arbeitet.

### 3. Ausbildung der Längstraversen als Steuerorgan für die Luftbeaufschlagung des Wärmetauschers

Der Wärmetauscher wird oben und unten mit unterschiedlichen lokalen Luftmengen beaufschlagt. Der Grund hierfür ist darin zu sehen, daß beispielsweise der Frischluftstrom in Frontscheibennähe einen höheren dynamischen Druckanteil hat als in Einbauringnähe. Deshalb wird der Wärmetauscher abhängig von der axialen Position mit unterschiedlichen Luftmengen beaufschlagt. Auf der Abluftseite geschieht ähnliches. Durch entsprechende Ausbildung der Längstraversen kann erreicht werden, daß die Luftmengen auf einer axialen Position für Frischluft und Abluft gleich groß sind, ohne daß hierfür Wärmetauscherfläche verloren geht. Die genaue Auslegung der Quertraversen ist jedoch erst nach entsprechender Vermessung der lokalen axialen Wirkungsgrade möglich.

### 4. Verwendung von Glas für den raumseitigen Trommelabschluß

Die Scheibe verwölbt sich infolge der Temperaturunterschiede (Bimetalleffekt). Glas, im Gegensatz zu einem denkbaren Kunststoff, hat eine 5-fach höhere Wärmeleitfähigkeit und etwa eine 7-fach kleinere Wärmeausdehnung, woraus insgesamt eine 35-fach geringere Verwölbung folgt. Eine Verwölbung würde den kritischen Dichtspalt veringern und die Trommel anstreifen lassen, da die axiale Fixierung der Trommel von der Scheibenseite aus erfolgt.

### 5. Axiale Fixierung der Trommel in der Ebene der Glasscheibe

Gemäß dem Stand der Technik wird es als vorteilhaft angesehen, die axiale Fixierung der Trommel in der Nähe des kritischen Dichtspaltes vorzunehmen und die Zentrallagerung axial frei verschiebbar zu halten. Die Gründe hierfür waren die erwähnte Scheibenverwölbung und die Ausdehnung der Längstraversen. Abweichend hiervon ist es im Falle einer Magnetlagerung vorteilhaft, die axiale Fixierung gegenteilig vorzunehmen, also diese Positionierung ins Zentrallager zu verlegen. Damit wird bewirkt, daß die Magnetlagerung ungeregelt einfach mit Permanentmagneten erfolgen kann und in sich stabil ist. Zum Ausgleich der thermischen Längenänderungen der Längstraversen und der restlichen Scheibenverwölbung wird eine außentemperaturabhängige Kompensationsvorrichtung vorgesehen, (Kunststoffrohr mit hohem Ausdehnungskoeffizienten), welche das Zentrallager axial relativ zur Quertraversenposition verschiebt.

### 6. Magnetlagerung

Die Magnetlagerung ist an der Stirnseite des offenen Endes der Trommel praktisch axial wirkend angeordnet und kann trotzdem radiale Kräfte aufnehmen. Erreicht wird dies dadurch, daß das im Einbauring angeordnete magnetische Gegensystem im Durchmesser etwa 1 mm kleiner gemacht wird. Die Trommel kann um die Zentrallagerung nur Kippbewegungen innerhalb eines Kegels ausführen, wobei die Kegelspitze in der Zentrallagerung liegt. Bei richtiger Dimensionierung von Dichtspalt und erwähntem Durchmesserunterschied wird eine stabile Lagerung dadurch erreicht, daß bei einer Kippbewegung der Trommel nach unten die Magnete oben sich annähern und damit die Bremsungskräfte zunehmen und damit der Kippbewegung entgegenwirken. Gleiches im umgekehrten Sinn erfolgt auf der gegenüberliegenden Seite (unten). Bei gleicher Kippbewegung entfernen sich die Magnete und das gegenwirkende Gesamtdrehmoment um den zentralen Drehpunkt wird weiter vergrößert. Eigentlich wirkt die magnetische Gegenlagerung im unteren Bereich tragkraftmindernd, aber die gesamte Magnetlagerung wird dadurch erheblich steifer und unempfindlicher gegenüber temperaturabhängigen Änderungen der magnetischen Eigenschaften (ca. 10 %). Berücksichtigt werden muß auch die Betriebslast, welche sich aus dem Rotorgewicht (hier 27 N) und den variablen Drücken in den Zuluft und Abluftkammern zusammensetzt (hier 0 - 9 N). Unter all diesen Umständen muß die Lagerung ausreichend sicher sein und der kritische Dichtspalt darf sich nur um ca. 0,1 mm ändern.

### 7. Lochblech

Es ist die Verwendung eines zweiten äußeren Lochbleches, welches in thermischen Kontakt mit den stimseitigen Ringen steht und eines ersten Lochbleches, auf den der Wärmetauscher aufgewickelt ist, und der thermisch und mechanisch von den stirnseitigen Ringen entkoppelt ist, vorgesehen. Die primäre Aufgabe des zweiten Lochbleches besteht darin, die stirnseitigen Ringe auf Raumtemperatur zu halten, um Kondensationserscheinungen und Eisbildung an der Magnetlagerung zu verhindern. Das Lochblech wirkt als relativ guter Wärmeaustauscher und befindet sich praktisch auf Raumtemperatur. Die damit verbundenen Ringe und die stirn seitige Magnetlagerung werden so auch auf Raumtemperatur gehalten. Wenn der stationäre Teil der Magnetlagerung ebenfalls vom Einbauring thermisch isoliert wird, bestehen keinerlei Probleme mehr, welche durch Kondensation und Eisbildung auftreten könnten. Da das äußere Lochblech in thermischen Kontakt mit den stirnseitigen Ringen steht, hat es auch tragende Funktion, im Gegensatz zum ersten inneren Lochblech. Dieses muß von den stirnseitigen Ringen isoliert gehalten werden, weil sich sonst an den Ringen eine Mitteltemperatur zwischen Raumtemperatur und Außentemperatur einstellen würde. Diese thermische Isolierung geschieht über nachgebende Silikoneinlagen, welche auch die unterschiedlichen Längenänderungen zwischen innerem und äußerem Lochblech ausgleichen können. Ähnlich isoliert wird auch die Glasscheibe aus den gleichen Gründen gehalten. Die Glasscheibe selbst könnte im Idealfall eine vakuumisolierte Einheit sein, falls verfügbar.

### 8. Mittelpunktpositionierung des Zentrallagers in der Quertraverse

Für die Funktion ist es wesentlich, daß das Zentrallager genau mittig zur Magnetlagerung sitzt, da Außermittigkeit den kritischen Dichtspalt beeinflußt. Denkbar wäre eine Justiermöglichkeit hierfür. Eine einfachere Lösung, welche direkt hohe Präzision trotz Zusammenbaues verschiedener Teile gewährleistet, besteht darin, alle beteiligten Teile auf Drehmaschinen herzustellen und die natürliche Rotationssymmetrie auszunutzen. Der Einbauring, an welchem die Längstraversen befestigt werden müssen, wird deshalb am inneren Umfang mit Rillen ähnlich Gewinderillen versehen. Die Längstraversen werden aus einem Zylindermantel herausgeschnitten, welcher ebenfalls an entsprechender axialer Position am Umfang und an einer Stirnseite mit solchen Rillen versehen wird. Die Quertraverse wird wiederum stirnseitig mit solchen Rillen versehen und direkt zentral aufgebohrt. Werden die Teile nun zusammengebaut, wobei für jede Verbindung nur eine einzige Schraube nötig ist, stimmt bereits alles: Die Längstraversen stehen im rechten Winkel zum Einbauring und die zentrale Bohrung sitzt immer mittig, unabhängig davon, wo genau die Schraubenlöcher positioniert sind, und alles ist ausreichend fest miteinander verbunden.

### 9. Trommelfixierung und axiale Justierung des kritischen Dichtspaltes, Zentrallagerkonstruktion

Das zentrale Rillenkugellager ist fest mit einer Stahlachse verbunden, welche durch die Quertraversenbohrung lose gesteckt ist und am anderen Ende ein Gewinde trägt, welches in einem ebenfalls gewindetragenden Kunststoffstück axial fixiert ist. Das Kunststoffstück wiederum ist an der Quertraverse fixiert. Wenn das Kunststoffstück kälter wird und sich zusammenzieht, entfernt sich das Kugellager von der anderen Seite der Quertraverse. Dies ist notwendig, weil gleichzeitig die Längstraversen kürzer werden, das äußere Lochblech in seiner Länge unverändert bleibt (Raumtemperatur) und deshalb der Dichtspalt kleiner werden würde. Durch die axiale Verschiebung des Kugellagers wird dies ausgeglichen. Das Kugellager sitzt mit seinem Außenring fest in einem Teil, welches außen ebenfalls ein Gewinde trägt und mit einem axialen Anschlag versehen ist. Auf dieses Gewinde kann die Trommel bis zum Anschlag eingeschraubt werden. Zentral ist eine Bohrung angebracht, durch welche mit einem Schraubendreher die zentrale Achse axial und damit der Dichtspalt justiert werden kann. (Alle beteiligten Teile sind aus Aluminium, Kunststoff hat einen 3 - 8-fach höheren Wärmeausdehnungskoeffizienten als Aluminium). Bei einer Demontage des Wärmetauschers verbleibt das Kugellager an der Quertraverse, so daß der Wärmetauscher problemlos mit Wasser gereinigt werden kann, und der Nutzer kann keine Schraube verlegen, da diese auf dem Kugellager verbleibt. Der Innengewinde tragende Flansch ist mit der Glasscheibe mittig zur offenen Stirnseite elastisch verklebt.

### 10. Trennwand, Innenraumnutzung

Auf der Trennwand werden alle Fremdkörper, welche in das Gerät gelangen, abgelagert. Aus diesem Grund wird die Trennwand magnetisch fixiert und nach unten herausnehmbar gestaltet. Die umlaufende magnetische Fixierung ermöglicht es auch leicht, die Trennwand dauerhaft dicht einzubauen. Die Magnetstreifen sind hierbei so angeordnet, daß sie dichtend aufeinandergleiten können. Bei extremen Lärmanforderungen läßt sich der Innenraum noch weiter für Schallabsorbierende Maßnahmen nutzen, da auf die Anströmung der Ventilatoren nicht sehr viel Rücksicht genommen werden muß. Die vor den Ansaugöffnungen angeordneten Wabengleichrichter ermöglichen dies.

### 11. Befestigung der Plexiglasschalen am Einbauring

Diese Verbindung erfolgt wegen der unterschiedlichen Wärmeausdehnungen über elastische Zwischenglieder luftdicht. Da der Bereich zwischen den Plexigalasschalen, welche auch die Ventilatoren halten, nach der Montage nicht mehr zugänglich sein wird und deshalb auch nicht gereinigt werden kann, muß Staubeintrag ebenso wie Feuchteeintrag verhindert werden (Durchsichtigkeit!). Würde dieser Bereich vollkommen luftdicht gehalten werden, entstünden Probleme infolge Druckänderungen bei Temperaturwechsel. Aus diesem Grund wird eine kontrollierte Öffnung vorgesehen, welche über ein Filter Luftaustausch gestattet. Da Luft nur einströmt, wenn die Temperatur sinkt, und Luft nur ausströmt, wenn die Temperatur steigt, kann sich das Feuchtigkeitsfilter selbst regenerieren. Die Anordnung im Frischluftbereich gewährleistet hierbei von Natur aus die niedrigste Luftfeuchtigkeit; unterstützt werden kann die Regeneration durch Sonneneinstrahlung. Bedarfsweise kann auch der Isolierglaszwischenraum mit dieser entstaubten und entfeuchteten Luft über eine sehr kleine Bohrung am Einbauring versorgt werden, so daß bei Sturmböen auch die innenliegende Isolierglasscheibe noch tragen kann.

### 12. Raumseitiger Frischluftauslaßbereich

Da der Frischluftstrom neben der radialen Strömungkomponente auch eine tangentiale besitzt, muß durch eine strömungsformende Maßnahme ein Hochsaugen in den Abluftbereich verhindert werden. Dies kann im einfachsten Fall eine kurze Schürze in dem Bereich sein, wo der Wärmetauscher aus dem Frischluftbereich in den Abluftbereich hinüberwechselt. Die Frischluft wird hierdurch nach unten abgelenkt. Auch ein Wabengitter ist denkbar. Ebenfalls könnte die Frischluft strahlartig in den Raum gelenkt werden. Die Strömungsformer werden magnetisch vom Einbauring gehalten.

### 13. Lärmmindernde Maßnahmen

Der Grundgedanke hierbei ist, Lärm erst gar nicht entstehen zu lassen, da vorhandener Lärm nur mit voluminösen Aufwand wieder entfernt werden kann. In der vorliegenden Konstruktion ist die hauptsächliche Lärmquelle der Ventilator. Hierin sind drei weitere Einzellärmquellen auszumachen, nämlich Luftwirbel, Motorgeräusche und Vibrationen.

Ausgehend von den Luftwirbeln ist deshalb die erste Maßnahme, die übliche kurze und kleine Ventilatorenbauart zu verlassen. Die Strömung braucht Platz, um sich sanft ordnen zu können. Deshalb wird eine ausreichend groß bemessene Einlaufdüse vorgesehen, welche ohne Radiensprünge die Strömung auf die Laufradanströmgeschwindigkeit beschleunigt. Gute Ergebnisse werden hierbei bereits bei einer elliptisch geformten Düse erzielt, die etwa bei 1,37-fachen Laufraddurchmesser beginnt und eine Bautiefe von etwa 0,24-fachem Laufraddurchmesser hat. Die Werte und die Form sind nur als Beispiel gedacht, um ungefähr eine Vorstellung vom Platzbedarf zu geben. Der Düse vorgeschaltet ist ein wabenformiger Strömungsgleichrichter von etwa 3 mm Wabentiefe und Durchmesser. Dieser ist halbkugelförmig oder als Korb ausgebildet, um seine Aufgabe bei niedrigen Strömungsgeschwindigkeiten und Druckverlusten ausführen zu können. Trotz seiner geringen Durchströmlänge formt er die Strömung außerordentlich effektiv. Der Korb wird um die Düse herum versenkt in einer Nut eingelassen, magnetisch fixiert, damit die Luft ohne Schwelle der Düse zuströmen kann. Hinter dem Laufrad beginnt der Einlauf in einen Diffusor. Der Einlauf besteht in einem Übergangsradius von etwa Laufraddurchmesser und mündet stetig in einen geraden Diffusor. Der große Übergangsradius verhindert ein frühzeitiges Ablösen der Strömung dadurch, daß die Strömungsrichtung nicht abrupt geändert wird.

Nach dem stetigen Diffusor ist noch ein kurzes Rohr als Stoßdiffusor nachgeschaltet, welches im Abluftauslaß auch ein Wiederansaugen der Abluft verhindert. Auch dieses Rohr wird magnetisch fixiert. Die gesamte Baulänge eines derartigen Ventilators beträgt etwa 1,5-fachen Laufraddurchmesser. Durch Ausnutzen des Platzes innerhalb der Wärmetauschertrommel steht hiervon nur etwa die Hälfte über.

Die Streben, welche den Ventilatormotor im Laufring halten, sind weit weg vom Laufrad am Ende des Diffusoreinlaufes angeordnet. Um die Strömungsverluste und tonale Geräusche niedrig zu halten, ist der Ventilatorantrieb mit einem Gegengewicht versehen, welches gestattet, die Einheit in ihrem Schwerpunkt aufzuhängen, wodurch es ermöglicht wird, die Haltestreben sehr dünn gestalten zu können. Die Haltestreben werden gleichzeitig als Stromzuführung für die Niederspannung genutzt.

Die Antriebseinheit selbst besteht aus Laufrad, Lagerung, Motorstator mit Elektronik, Lagerrohr, Gegengewicht, Lagerrohrgehäuse, Schwingungsentkopplung und Justiervorrichtung.

Das Lager (einteiliges Gleitlager) bildet mit dem Laufrad eine Einheit, welche mit einem Sicherungsring zusammengehalten wird. Diese Einheit kann in das Lagerrohr axial eingesteckt werden und bildet im Prinzip ein gleitgelagertes Gleitlager. Es versteht sich von selbst, daß die Lagerrohrbohrung und Gleitlageraußendurchmesser nur sehr kleines Spiel aufweisen dürfen, deshalb wird diese Passung auch mit einem sehr zähen Fett geschmiert. Der Motorstator wird ebenfalls auf das Lagerrohr aufgesteckt und an bestimmten punktuellen Stellen mit Silikon fixiert. Hiermit soll erreicht werden, daß im Bedarfsfall notfalls ein neuer Motorstator leicht montiert werden kann. Der Stator bekommt seinen Strom von den Streben über Steckverbindungen.

Das Lagerrohr, am Ende mit einem Gegengewicht versehen, wird von zwei axial, radial und drehelastischen Silikonscheiben gehalten, die symmetrisch zum Schwerpunkt angeordnet sind.

Die Silikonscheiben selbst sind radial verschiebbar im Antriebsgehäuse gelagert. Über ein Gewinde und ein kraftübertragendes Distanzstück kann ihre Position durch axiales Klemmen fixiert werden.

Der Zweck dieser Konstruktion ist es, den Ventilator sehr weich aufzuhängen zu können und eventuelle Setzerscheinungen der Dämpfungselemente auch nachträglich korrigieren zu können (Schwingungsisolation).

Diese Konstruktion gestattet es, alle in Frage kommenden Korrekturen (radiale und Winkelkorrekturen) mit einer einzigen Schraube zu fixieren.

Notwendig sind diese Maßnahmen deshalb, weil aus Lärm- und Leistungsgründen das Laufrad mit sehr engem Spiel im Laufring laufen muß. Der Laufring selbst wird ebenfalls weich mit der Einlaufdüse und dem Diffusor verbunden, und zwar so, daß die Randströmung nur wenig gestört wird.

Erreicht wird dies dadurch, daß ein U-formiger Silikonring, der mit seiner offenen Seite auf die Drehachse zeigt, die Teile verbindet. Diese weiche Verbindung ist auch wegen der unterschiedlichen Wärmeausdehnung (Acrylglas-Alu) notwendig. Diese doppelte Isolierung ist notwendig, wenn man bedenkt, daß die Plexiglasschale wie eine Lautsprechermembran wirkt. Da das Gewicht der Ventilatorenkonstruktion relativ hoch ist und die U-Ringe sehr weich sein müssen, kann es notwendig sein, über ein elastisches Glied, welches am Einbauring befestigt wird, einen Teil des Gewichtes zu kompensieren.

### 14. Antidrallwabe im Abluftbereich direkt hinter dem Wärmetauscher

Da der Abluft nach Passage des Wärmetauschers ein Drall aufgeprägt ist, wird dieser in einem ersten Wabengitter weitgehend vernichtet. Das zweite Wabengitter direkt vor dem Abluftventilator übernimmt dann den restlichen Drall. Nur beide Maßnahmen zusammen bewirken die gewünschte lärmmindernde Entdrallung.

Zur Erzielung einer Befeuchtung der durch den Wärmetauscher geleiteten Luft ist vorzugsweise vorgesehen, daß der Wärmetauscher in eine Kalziumchloridlösung gebracht wird, so daß er nach der Entnahme hieraus mit Kalziumchlorid getränkt ist, welches in der Lage ist, Wasserdampf aufzunehmen.

Die Feuchterückgewinnung kann durch die Wahl der Konzentration der Kalziumchloridlösung eingestellt werden.

Zur näheren Erläuterung der Erfindung dient die Zeichnung. Dabei zeigen:

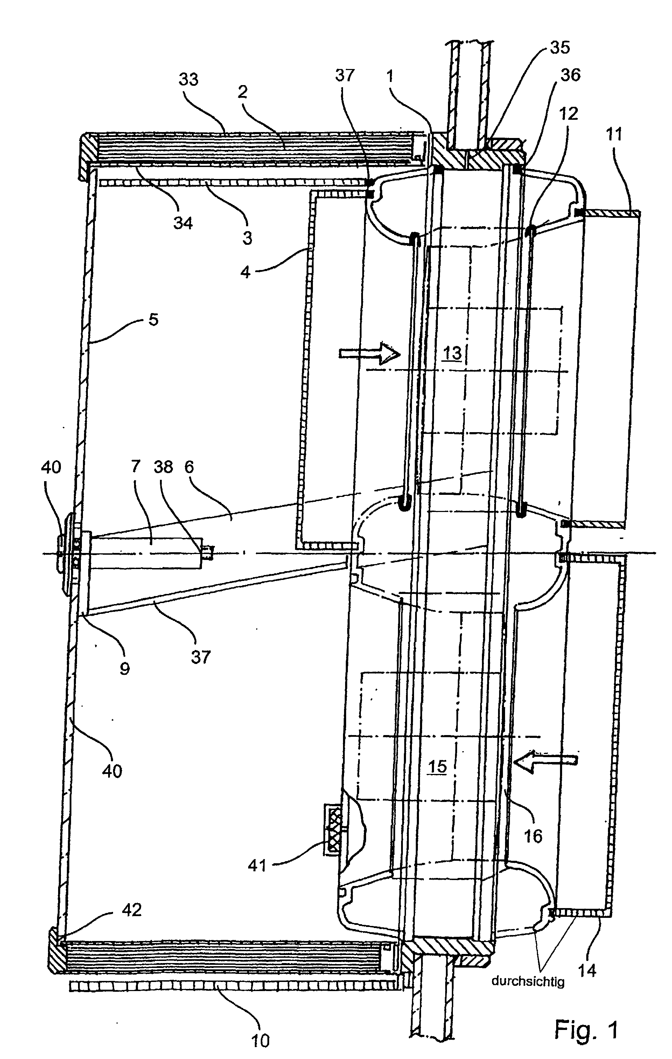

- Fig. 1: einen schematischen Schnitt durch die gesamte Wärmetauscheranordnung,

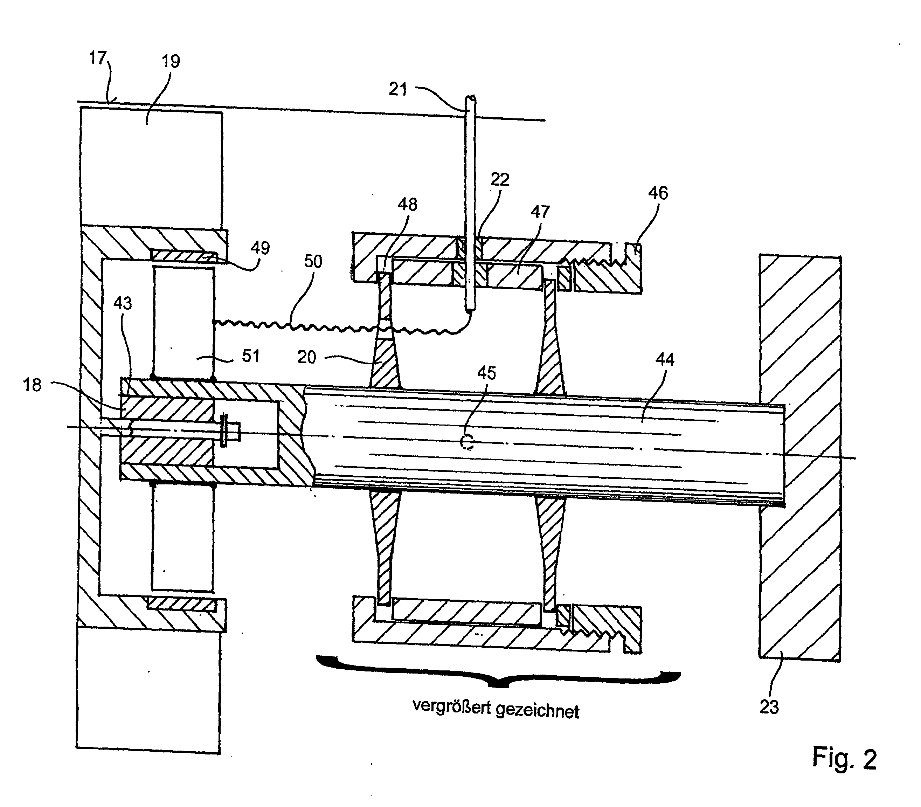

- Fig. 2: eine vergrößerte Darstellung des Bereiches der Ventilatoraufhängung,

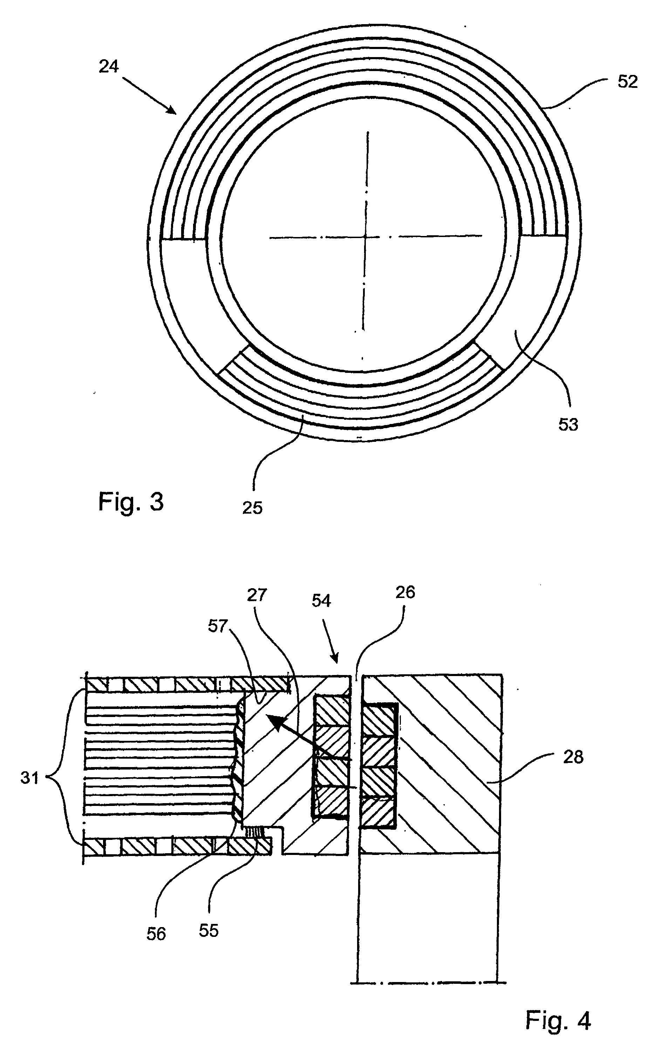

- Fig. 3: eine Schnittdarstellung der Magnetlagerung,
- Fig. 4: eine vergrößerte Schnittdarstellung des Dichtspaltbereiches,

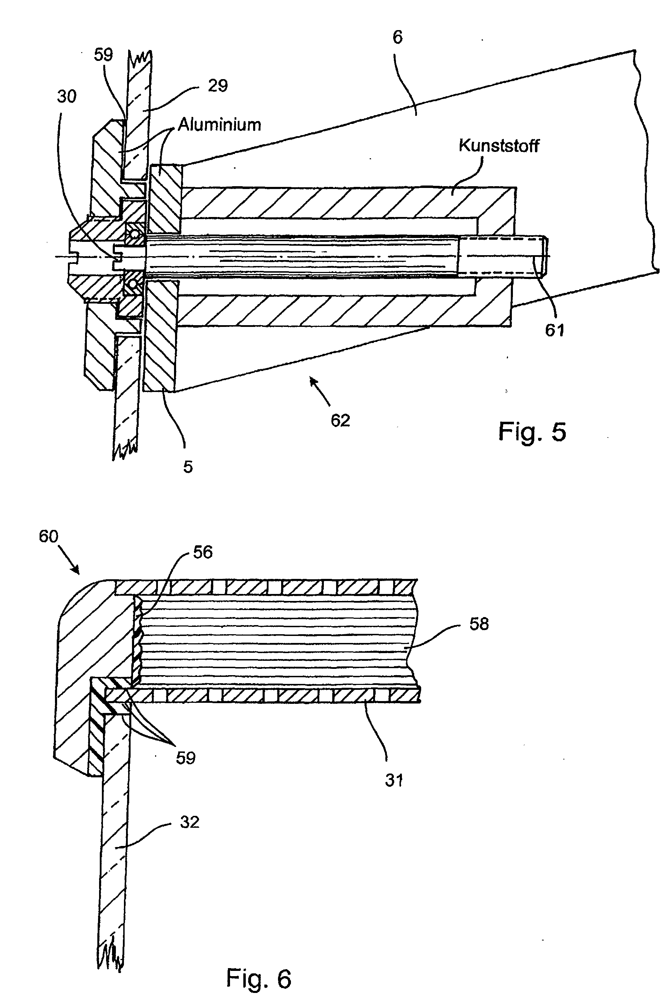

- Fig. 5: eine Schnittdarstellung des Zentrallagers einschließlich der vorgesehenen Temperaturkompensation und
- Fig. 6: eine vergrößerte Schnittdarstellung des Frontringbereiches.

Dem nachfolgenden Beschreibungsteil sind weitere bevorzugte Ausgestaltungen bzw. alternative Lösungen der Erfindungsaufgabe entnehmbar.

Regenerativer Gegenstrom-Wärmetauscher für gasförmige Medien, insbesondere Luftwärmetauscher für die Raumbelüftung von Gebäuden, mit einer in wechselnder Folge von dem wärmeabgebenden und dem wärmeaufnehmenden gasförmigen Medium durchstromten Wärmetauschertrommel, deren aktive Oberfläche aus einem mehrschichtigen Netz besteht, wobei wenigstens jeweils ein Ventilator einen Zuluft- und einen Abluftstrom erzeugt, und wobei die Wärmetauschertrommel im wesentlichen eine äußere feste Gerätebegrenzung bildet.
Zweckmäßigerweise werden als Dichtelemente ausschließlich berührungslose Spaltdichtungen verwandt. Zweckmäßigerweise hat ein außeres Lochblech thermischen Kontakt mit den stirnseitigen Ringen, um diese ungefähr auf Raumtemperatur zu halten. Zweckmäßigerweise wird ein relativ "kaltes" inneres Lochblech thermisch isoliert gehalten. Zweckmäßigerweise verbleibt das stirnseitige Zentrallager nach Abzug der Trommel in der Quertraverse. Zweckmäßigerweise besteht ein stirnseitiger Verschluß der Trommel aus einem durchsichtigen Material, vorzugsweise aus Glas. Zweckmäßigerweise verbleibt nach Lösen einer einzigen zentral angeordneten Fixiereinrichtung diese unverlierbar an einem der zu trennenden Teile.
Zweckmäßigerweise sind zum Ausgleich thermischer Dehnungen hochelastische Zwischenglieder verwendet für Glasscheibe/Zentrallageraufnahme oder Außenringe/inneres Lochblech oder Scheibeneinbauring/Ventilatorenhalterung oder Ventilatorenhalterung/Ventilatorenlaufring. Zweckmäßigerweise teilen die Längstraversen, welche gleichzeitig als Dichtelement zwischen Zuluft- und Abluftkammer dienen, in Rotationsachsenrichtung gesehen den Kammerumfang bzw. die in Umfangsrichtung beaufschlagten Kammerlängen bedarfsgemäß auf, so daß im Prinzip jeder axiale Kammerabschnitt mit denselben Luftmengen komplementär beaufschlagt wird. Zweckmäßigerweise ist die Längstraverse thermisch isoliert am Einbauring befestigt.

Zweckmäßigerweise erfolgt die Anströmung der Ventilatoren durch ein drallnehmendes Element, z. B. durch ein Wabengitter. Zweckmäßigerweise strömt die Abluft nach Passage des Wärmetauschers durch ein oder mehrere drallnehmende Elemente. Zweckmäßigerweise bilden die Ventilatorlaufräder samt Lagerung eine magnetisch fixierte, axial werkzeuglos herausnehmbare Einheit. Zweckmäßigerweise werden Lagerwärme und Motorwärme der Ventilatoren über ein Lagerrohr an ein im Luftstrom befindliches Gegengewicht abgegeben, das vorzugsweise bereits schwingungsgedämpft in einem Gehäuse gelagert ist, wobei vorzugsweise der Schwingungsdämpfer auch als Schallabsorber in Form eines Silikonschaumes ausgebildet ist, um höherfrequente Kommutierungsgeräusche zu mindern. Zweckmäßigerweise ist die Ventilatorenaufhängung in einem Laufring dergestalt, daß die Einheit im Schwerpunkt aufgehängt ist, und Schwingungen bereits am Entstehungsort weitgehend gedämpft werden, so daß die Halterung sehr schwach ausgeführt werden kann, welches geringe Lärmentwicklung und erhöhte Luftleistung bewirkt. Zweckmäßigerweise laufen die Laufräder mit sehr engem Spiel in ihrem Gehäuse. Zweckmäßigerweise sind strömungsformende Elemente magnetisch fixiert. Zweckmäßigerweise ist ein strömungsformendes Element auf der raumseitigen Ausblasseite angeordnet, welches verhindert, daß die frische Zuluft wieder direkt in den oberen Absaugbereich gelangt. Dieses Element kann im einfachsten Fall bereits eine kurze Schürze sein, welche mit Hilfe der aus den letzten 10% des Wärmetauschers austretenden Luft die restliche vorherige Luft durch Strahlwirkung nach unten ablenkt. Zweckmäßigerweise wird die raumseitige Abluft von oben abgesaugt, und die frische Zuluft nach unten geblasen. Zweckmäßigerweise ist der gesamte Bereich innerhalb des Wärmetauscher-Durchmessers weitgehend durchsichtig gestaltet. Zweckmäßigerweise sind die Ventilatoren innerhalb des Wärmetauscher-Druchmessers angeordnet. Zweckmäßigerweise sind beide Ventilatoren auf gleichem Temperaturniveau, vorzugsweise auf Außentemperaturniveau angeordnet. Zweckmäßigerweise ist die kammertrennende Wand nach unten herausnehmbar, vorzugsweise magnetisch fixiert. Zweckmäßigerweise ist die Kammertrennwand als Schallabsorber ausgebildet. Zweckmäßigerweise enthält der innenliegende Raum direkt vor der geschlossenen Trommelstirnseite einen flächigen stillstehenden Schallabsorber. Zweckmäßigerweise sind die Ventilatoren mit einem düsenförmigen Einlauf versehen, der mindestens 1,2 mal größer als der Laufraddurchmesser ist, wobei vorzugsweise der Ventilatorenlaufring von Einlaufdüse und Diffusor über weiche Zwischenglieder körperschallentkcppelt sind. Zweckmäßigerweise wird bei Isolierverglasungen eine kontrollierte Verbindung zwischen Isolierglasscheibenzwischenraum und Außenluft hergestellt, wobei die Luft, welche durch diese Verbindung strömt, durch ein Staub- und Feuchtigkeitssorbtionsfilter gelangt, wobei vorzugsweise der Filter so angeordnet ist, daß mögliche Sonnenbestrahlung das Filter erwärmt und Feuchtigkeit ausgetrieben wird, so daß es sich automatisch regeneriert. Zweckmäßigerweise ist der Wärmetauscher in einem Fenster eingebaut. Zweckmäßigerweise ist Feuchterückgewinnung durch die Wahl der Konzentration einer Kalziumchloridlösung einstellbar. Zweckmäßigerweise ist ein passives kombiniertes Lüftungselement vorgesehen, das ein statisches Element enthält, welches einem Luftstrom einen Drall erteilt, bevor er durch den Warmetauscher strömt und diesen, ohne daß ein Ventilator vorgesehen sein müßte, antreibt, wobei vorzugsweise die Rotationsachse senkrecht steht. Regenerativer Wärmetauscher einer drehenden Bauart, wobei der Antrieb der Wärmetauscher-Trommel durch einen drallbehafteten Luftstrom erzeugt wird, wobei zweckmäßigerweise ein passives kombiniertes Lüftungselement vorgesehen ist, das ein statisches Element enthält, welches einem Luftstrom einen Drall erteilt, bevor er durch den Wärmetauscher strömt und diesen, ohne daß ein Ventilator vorgesehen sein müßte, antreibt, wobei vorzugsweise die Rotationsachse senkrecht steht. Elastische Ventilatorenlagerrohrhalterung, dadurch gekennzeichnet, daß ein den Ventilatorantrieb und ein Gegengewicht verbindendes Zwischenstück von zwei elastischen Scheiben gehalten wird, welche wiederum in einem feststehenden Gehäuse radial verschiebbar und axial über ein Zwischenstück gemeinsam klemmbar in ihrer Position fixierbar sind.

### Bezugszeichenliste:

- 1: Magnetlager, DichteJement
- 2: Wärmetauscher + LF + SD + T
- 3: Antidrallwabe
- 4: Antidrallkorb
- 5: Sicherheitsglas
- 6: Längstraverse, Dichtelement + Beaufschlagungssteuerelement
- 7: Axialdichtspalt-Justierschraube
- 8: Thermische Kompensation (axial)
- 9: Quertraverse, Dichtelement
- 10: Ausblasströmungsendroller
- 11: Strahlrohr (durchsichtig)
- 12: Körperschallisolator
- 13: Abluftventilator
- 14: Strömungsgleichrichterkorb, Windgeräuschschutz
- 15: Zuluftventilator und WT-Antrieb (Drallerzeuger)
- 16: Axiallaufrad, magnetisch fixiert, Laufrad samt Gleitlager wechselbar
- 17: Laufring
- 18: Gleitlaser
- 19: Laufrad
- 20: Elastische Scheiben
- 21: Haltestrebe, Stromzuführung
- 22: Elektrische Isolation
- 23: Gegengewicht
- 24: Stator
- 25: Magnet
- 26: Kritischer Dichtspalt
- 27: Res. Kraftrichtung
- 28: Einbauring
- 29: Glasscheibe
- 30: Schraubendreherjustierung
- 31: Lochblech
- 32: Glas
- 33: Lochblech (tragend)
- 34: Lochblech (thermisch isoliert)
- 35: Druckausgleichsbohrung
- 36: Dehnungsausgleich
- 37: Magnetische Fixierung
- 38: Effektiver axialer Fixpunkt
- 39: Trennboden, Schallabsorber ― herausnehmbar, magnetisch fixiert
- 40: Zentralbefestigungsschraube (bei Trommelabnahme verbleibt Lager an Quertraverse
- 41: Druckausgleich, Entstauber + Dauerentfeuchter, solar-regeneriert
- 42: Dehnungsausgleich und Isolator
- 43: Spielsitz (eng)
- 44: Lagerrohr
- 45: Schwerpunkt
- 46: Klemmschraube
- 47: Klemmdistanzstück
- 48: Platz für radiale Verschiebung
- 49: Magnet
- 50: Strom
- 51: Stator (Rotor durchgängig magnetisch)
- 52: Einbauring
- 53: Nicht-Magnet
- 54: Magnetlagerung
- 55: Thermische und mechanische Entkopplung
- 56: Vergussmasse (Silikon)
- 57: Kontakt
- 58: WT-Netz
- 59: Silikon, elastisch geklebt
- 60: Detail Glascheibe/Frontring
- 61: Stahlachse
- 62: Detail Zentrallager + Temperaturkompensation

## Patentansprüche

1. Regenerativer Gegenstrom-Wärmetauscher für gasförmige Medien, insbesondere Luftwärmetauscher für die Raumbelüftung von Gebäuden, mit einer in wechselnder Folge von dem wärmeabgebenden und dem wärmeaufnehmenden gasförmigen Medium durchströmten Wärmetauschertrommel, die ein offenes, eine Stirnseite ausbildendes Ende aufweist und in einem Lager drehbar gelagert ist und deren aktive Oberfläche aus einem mehrschichtigen Netz besteht, wobei wenigstens jeweils ein Ventilator einen Zuluftund einen Abluftstrom erzeugt,
**dadurch gekennzeichnet, daß**
die Wärmetauschertrommel im wesentlichen eine äußere feste Gerätebegrenzung bildet, und das Lager als Kombination eines mechanischen Lagers und eines Magnetlagers ausgebildet ist, wobei das Magnetlager an der Stirnseite des offenen Endes der Wärmetauschertrommel angeordnet ist, und wobei das mechanische Lager mit einem Zentrallager ausgebildet ist, an dem die Wärmetauscher-Trommel derart fixiert ist, daß ihre Trommelachse im montierten Zustand im wesentlichen nur Kippbewegungen innerhalb eines Kegels ausführen kann, dessen Kegelspitze in dem Zentrallager liegt.

2. Regenerativer Gegenstrom-Wärmetauscher nach Anspruch 1, **dadurch gekennzeichnet, daß** das Zentrallager fest mit einem Stator verbunden ist.

3. Regenerativer Gegenstrom-Wärmetauscher nach Anspruch 2, **dadurch gekennzeichnet, daß** der Stator mit einem ortsfesten Ring ausgebildet ist.

4. Regenerativer Gegenstrom-Wärmetauscher nach Anspruch 1, **dadurch gekennzeichnet, daß** das Magnetlager nur mit Permanentmagneten gebildet ist.

5. Regenerativer Gegenstrom-Wärmetauscher nach Anspruch 2, **dadurch gekennzeichnet, daß** ein mit der rotierbaren Wärmetauschertrommel verbundenes Teilmagnetsystem vorgesehen ist, dessen Magnetisierungsrichtung parallel zu der Trommelachse ausgebildet ist.

6. Regenerativer Gegenstrom-Wärmetauscher nach Anspruch 5, **dadurch gekennzeichnet, daß** ein relativ zur Wärmetauschertrommel feststehendes, mit dem Stator verbundenes Teilmagnetsystem vorgesehen ist.

7. Regenerativer Gegenstrom-Wärmetauscher nach Anspruch 6, **dadurch gekennzeichnet, daß** das feststehende Teilmagnetsystem einen Durchmesser aufweist, der etwas kleiner ist als der Durchmesser des mit der rotierbaren Wärmetauschertrommel verbundenen Teilmagnetsystems.

8. Regenerativer Gegenstrom-Wärmetauscher nach Anspruch 2 oder 3, **dadurch gekennzeichnet, daß** das Magnetlager mit einem Hauptmagnetlager im Bereich einer oberen Hälfte des Stators und einem entgegengesetzt wirkenden, also die Tragfähigkeit mindernden zweiten Magnetlager im Bereich einer unteren Hälfte des Stators ausgebildet ist, welches das Hauptmagnetlager ergänzt.

9. Regenerativer Gegenstrom-Wärmetauscher nach Anspruch 1, **dadurch gekennzeichnet, daß** das Magnetlager gleichzeitig eine Dichtfunktion erfüllt.

10. Regenerativer Gegenstrom-Wärmetauscher nach Anspruch 2, **dadurch gekennzeichnet, daß** das Zentrallager mit einer Quertraverse und diese mit zwei, mit dem Stator fest verbundenen Längstraversen fest verbunden ist.

11. Regenerativer Gegenstrom-Wärmetauscher nach Anspruch 10, **dadurch gekennzeichnet, daß** die Längstraversen derart mit dem Stator verbunden sind, daß eine Winkelpositionsungenauigkeit auf einer zur Trommelachse senkrecht stehenden Achse keinen Einfluß auf den Mittelpunkt des Zentrallagers hat.

12. Regenerativer Gegenstrom-Wärmetauscher nach Anspruch 10 oder 11, **dadurch gekennzeichnet, daß** die Quertraverse und/oder die Längstraversen als wenigstens teilweise auf einer Drehbank hergestellte Teile oder als davon abgeleitete Teile ausgebildet sind.

13. Regenerativer Gegenstrom-Wärmetauscher nach Anspruch 2 oder 3, **dadurch gekennzeichnet, daß** die Wärmetauschertrommel ein Mittel zur Einstellung ihrer axialen Position aufweist, wobei das Mittel derart ausgebildet ist, daß ein verlustbringender Dichtspalt zwischen der Wärmetauschertrommel und dem Stator von außen einstellbar ist.

14. Regenerativer Gegenstrom-Wärmetauscher nach Anspruch 1, **dadurch gekennzeichnet, daß** das Zentrallager axial verschieblich ausgebildet ist.

15. Regenerativer Gegenstrom-Wärmetauscher nach Anspruch 10, **dadurch gekennzeichnet, daß** eine Kompensationsvorrichtung zum Ausgleich der thermischen Längenänderung insbesondere der Längstraversen vorgesehen ist, die derart ausgebildet ist, daß eine Änderung der Außentemperatur zu einer axialen Verschiebung des Zentrallagers relativ zu der Quertraverse führt.

16. Regenerativer Gegenstrom-Wärmetauscher nach Anspruch 1, **dadurch gekennzeichnet, daß** die Wärmetauschertrommel eine geschlossene Stirnseite aufweist und von dieser Stirnseite her axial fixierbar ausgebildet ist.

17. Regenerativer Gegenstrom-Wärmetauscher nach Anspruch 1, **dadurch gekennzeichnet, daß** die Wärmetauschertrommel hindernisfrei axial abziehbar ausgebildet ist.

18. Regenerativer Gegenstrom-Wärmetauscher nach Anspruch 1, **dadurch gekennzeichnet, daß** die Wärmetauschertrommel mittels eines drallbehafteten Luftstromes in Rotation versetzbar ist.

19. Regenerativer Gegenstrom-Warmetauscher nach Anspruch 18, **dadurch gekennzeichnet, daß** als drallbehafteter Luftstrom direkt der Abstrom eines axialen Ventilators benutzt wird.

20. Regenerativer Gegenstrom-Wärmetauscher nach Anspruch 19, **dadurch gekennzeichnet, daß** der axiale Ventilator parallel zu der Trommelachse ausbläst und dessen Drehachse gegenüber der Trommelachse beabstandet angeordnet ist.

21. Regenerativer Gegenstrom-Wärmetauscher nach Anspruch 19 oder 20, **dadurch gekennzeichnet, daß** der Ventilator als Zuluftventilator ausgebildet ist.

22. Regenerativer Gegenstrom-Wärmetauscher nach Anspruch 1, **dadurch gekennzeichnet, daß** die Ventilatoren wenigstens teilweise innerhalb eines inneren Trommelraumes der Wärmetauschertrommel angeordnet sind.

## Claims

1. Regenerative counterflow heat exchanger for gaseous media, in particular an air heat exchanger for ventilating rooms in buildings, with a heat exchanger drum receiving in an alternating sequence the flow of the heat emitting and heat absorbing gaseous medium, said drum having an open end forming one face side and being rotatably supported in a bearing and having an active surface consisting of a multilayered network, whereby at least one ventilator produces a flow of feed air and one ventilator a flow of exhaust air,
**characterized in that**
the heat exchanger drum substantially forms a fixed outer limitation of the device and the bearing is designed as a combination of a mechanical bearing and a magnetic bearing, whereby the magnetic bearing is arranged on the face side of the open end of the heat exchanger drum and whereby the mechanical bearing is designed with a central bearing on which the heat exchanger drum is fixed in a way such that in the mounted condition, its drum axle is substantially capable of executing only tilting movements within a cone, with the tip of the cone being dispose d in the central bearing.

2. Regenerative counterflow heat exchanger according to claim 1, **characterized in that** the central bearing is connected with a stator in a fixed manner.

3. Regenerative counterflow heat exchanger according to claim 2, **characterized in that** the stator is designed with a stationary ring.

4. Regenerative counterflow heat exchanger according to claim 1, **characterized in that** the magnetic bearing is formed only with permanent magnets.

5. Regenerative counterflow heat exchanger according to claim 2, **characterized in that** provision is made for a part magnetic system connected with the rotatable heat exchanger drum, the magnetizing device of said part magnetic system being arranged parallel with the axle of the drum.

6. Regenerative counterflow heat exchanger according to claim 5, **characterized in that** provision is made for a part magnetic system, the latter being stationary relative to the heat exchanger drum and connected with the stator.

7. Regenerative counterflow heat exchanger according to claim 6, **characterized in that** the stationary part magnetic system has a diameter slightly smaller than the diameter of the part magnetic system connected with the rotatable heat exchanger drum.

8. Regenerative counterflow heat exchanger according to claim 2 or 3, **characterized in that** the magnetic bearing is formed with a main magnetic bearing in the region of an upper half of the stator, and with an oppositely acting and thus the bearing capacity-reducing second magnetic bearing in the region of a lower half of the stator, said second magnetic bearing complementing the main magnetic bearing.

9. Regenerative counterflow heat exchanger according to claim 1, **characterized in that** the magnetic bearing at the same time satisfies a sealing function.

10. Regenerative counterflow heat exchanger according to claim 2, **characterized in that** the central bearing is connected with a cross bar and the latter is connected in a fixed way with two longitudinal bars connected in a fixed way with the stator.

11. Regenerative counterflow heat exchanger according to claim 10, **characterized in that** the longitudinal bars are connected with the stator in such a way that any inaccuracy in the angular position on an axis disposed perpendicular to the axis of the drum has no influence on the center point of the central bearing.

12. Regenerative counterflow heat exchanger according to claim 10 or 11, **characterized in that** the cross bar and/or the longitudinal bars are components at least partly produced on a turning lathe, or components derived therefrom.

13. Regenerative counterflow heat exchanger according to claim 2 or 3, **characterized in that** the heat exchanger drum has a means for adjusting its axial position, whereby said means is designed in such a way that a loss-causing sealing gap is adjustable between the heat exchanger drum and the stator from the outside.

14. Regenerative counterflow heat exchanger according to claim 1, **characterized in that** the central bearing is axially displaceable.

15. Regenerative counterflow heat exchanger according to claim 10, **characterized in that** provision is made for a compensating device for compensating the thermal change in the length particularly of the longitudinal bars, said compensating device being designed in such a way that a change in the outside temperature leads to an axial displacement of the central bearing relative to,the cross bar.

16. Regenerative counterflow heat exchanger according to claim 1, **characterized in that** the heat exchanger drum has a closed face side and that it is axially fixable from said face side.

17. Regenerative counterflow heat exchanger according to claim 1, **characterized in that** the heat exchanger drum is designed in such a way that it can be pulled off axially without obstruction.

18. Regenerative counterflow heat exchanger according to claim 1, **characterized in that** the heat exchanger drum can be put into rotation by means of a current of air provided with a twist.

19. Regenerative counterflow heat exchanger according to claim 18, **characterized in that** the off-flow of an axial ventilator is directly used as the current of air provided with a twist.

20. Regenerative counterflow heat exchanger according to claim 19, **characterized in that** the axial ventilator blows out parallel with the axis of the drum and that its axis of rotation is arranged spaced from the axis of the drum.

21. Regenerative counterflow heat exchanger according to claim 19 or 20, **characterized in that** the ventilator is designed as a feed air ventilator.

22. Regenerative counterflow heat exchanger according to claim 1, **characterized in that** the ventilator are at least partly arranged within an inner space of the drum of the heat exchanger.

## Revendications

1. Échangeur de chaleur régénérant à contre-courant pour médium gazeux, en particulier échangeur de chaleur d'air pour l'aération de bâtiments, avec un tambour d'échange de chaleur à circulation alternée de médium gazeux apportant ou récupérant de la chaleur, présentant une face frontale formant une extrémité ouverte montée sur un palier rotatif et dont la surface active est formée d'un grillage à plusieurs couches, où au moins un ventilateur génère un flux entrant et sortant, **caractérisé en ce sens que**
le tambour d'échange de chaleur constitue pour l'essentiel une délimitation externe de l'appareil, et que le palier est formé d'une combinaison d'un palier mécanique d'un panier magnétique, le palier magnétique étant fixé à la face frontale de l'extrémité ouverte du tambour d'échange de chaleur, et où le palier mécanique est formé d'un palier central auquel le tambour d'échange de chaleur est fixé de telle manière que l'axe du tambour ne puisse réaliser qu'un mouvement de bascule à l'intérieur d'un cône dont le sommet se trouve au niveau du palier central.

2. Échangeur de chaleur régénérant à contre-courant selon la revendication 1, **caractérisé en ce** sens que le palier central est lié de manière fixe à un stator.

3. Échangeur de chaleur régénérant à contre-courant selon la revendication 2, **caractérisé en ce** sens que le stator est formé d'un anneau fixe.

4. Échangeur de chaleur régénérant à contre-courant selon la revendication 1, **caractérisé en ce** sens que le palier magnétique n'est constitué que d'aimants permanents.

5. Échangeur de chaleur régénérant à contre-courant selon la revendication 2, **caractérisé en ce** sens qu'il comporte un sous-système magnétique lié au tambour d'échange de chaleur, dont le flux magnétique est orienté parallèlement à l'axe du tambour.

6. Échangeur de chaleur régénérant à contre-courant selon la revendication 5, **caractérisé en ce** sens qu'il comporte un sous-système magnétique lié au stator, fixe par rapport au tambour d'échange de chaleur.

7. Échangeur de chaleur régénérant à contre-courant selon la revendication 6, **caractérisé en** ce sens que le sous-système magnétique fixe présente un diamètre légèrement inférieur au diamètre du sous-système magnétique lié au tambour rotatif d'échange de chaleur.

8. Échangeur de chaleur régénérant à contre-courant selon les revendications 2 ou 3, **caractérisé en ce** sens que le palier magnétique est formé d'un palier magnétique principal situé dans la zone de la moitié supérieure du stator et d'un second palier magnétique, agissant en sens contraire, c'est-à-dire réduisant la portance, situé dans la zone de la moitié inférieure du stator, qui complète le palier magnétique principal.

9. Échangeur de chaleur régénérant à contre-courant selon la revendication 1, **caractérisé en ce** sens que le palier magnétique remplit simultanément une fonction d'étanchéité.

10. Échangeur de chaleur régénérant à contre-courant selon la revendication 2, **caractérisé en ce** sens que le palier central est lié à une traverse transversale et que celle-ci est fixée par des traverses longitudinales fixées au stator.

11. Échangeur de chaleur régénérant à contre-courant selon la revendication 10, **caractérisé en ce** sens que les traverses longitudinales sont fixées au stator de telle manière qu'une imprécision de position angulaire selon un axe vertical par rapport à l'axe du tambour n'a aucune influence sur le centre du palier central.

12. Échangeur de chaleur régénérant à contre-courant selon les revendications 10 ou 11, **caractérisé en ce** sens que la traverse transversale et/ou les traverses longitudinales sont formées au moins partiellement de pièces tournées ou de pièces dérivées de ces pièces.

13. Échangeur de chaleur régénérant à contre-courant selon les revendications 2 ou 3, **caractérisé en ce** sens que le tambour d'échange de chaleur présente un moyen de réglage de sa position axiale, ce moyen étant formé de manière à former une fente présentant une perte réglable de l'extérieur entre le tambour d'échange de chaleur et le stator.

14. Échangeur de chaleur régénérant à contre-courant selon la revendication 1, **caractérisé en ce** sens que le palier central peut être déplacé de manière axiale.

15. Échangeur de chaleur régénérant à contre-courant selon la revendication 10, **caractérisé en ce** sens qu'un dispositif de compensation est prévu, compensant la modification thermique de la longueur, en particulier des traverses longitudinales, formé de telle manière qu'une modification de la température externe conduise à un déplacement axial du palier central par rapport à la traverse transversale.

16. Échangeur de chaleur régénérant à contre-courant selon la revendication 1, **caractérisé en ce** sens que le tambour d'échange de chaleur présente une face frontale fermée et que cette face frontale est formée de manière à pouvoir être fixée axialement.

17. Échangeur de chaleur régénérant à contre-courant selon la revendication 1, **caractérisé en ce** sens que le tambour d'échange de chaleur est constitué de manière à pouvoir être extrait sans obstacle selon son axe.

18. Échangeur de chaleur régénérant à contre-courant selon la revendication 1, **caractérisé en** ce sens que le tambour d'échange de chaleur peut être mis en rotation au moyen d'un flux d'air rotatif.

19. Échangeur de chaleur régénérant à contre-courant selon la revendication 18, **caractérisé en ce** sens que le flux sortant d'un ventilateur axial est utilisé comme flux d'air rotatif.

20. Échangeur de chaleur régénérant à contre-courant selon la revendication 19, **caractérisé en ce** sens que le ventilateur axial souffle parallèlement à l'axe du tambour et que son axe de rotation est placé à une certaine distance de l'axe de rotation du tambour.

21. Échangeur de chaleur régénérant à contre-courant selon la revendication 19 ou 20, **caractérisé en ce** sens que le ventilateur est conçu comme ventilateur d'alimentation.

22. Échangeur de chaleur régénérant à contre-courant selon la revendication 1, **caractérisé en ce** sens que les ventilateurs sont au moins partiellement placés à l'intérieur du volume du tambour d'échange de chaleur.
